# EUROPÄISCHE PATENTSCHRIFT

(11) **EP 3 375 670 B1**
(45) Veröffentlichungstag und Bekanntmachung des Hinweises auf die Patenterteilung: **16.10.2019**
(21) Anmeldenummer: 18162480.0
(22) Anmeldetag: 19.03.2018
(51) Int. Cl.: B60R 19/48

(54) **ELEKTRONIKMODULSYSTEM FÜR EIN KRAFTFAHRZEUG**
ELECTRONIC MODULE SYSTEM FOR A MOTOR VEHICLE
SYSTÈME MODULAIRE ÉLECTRONIQUE POUR UN VÉHICULE AUTOMOBILE

(30) Priorität: 17.03.2017 DE 202017101564 U; 28.04.2017 DE 202017102515 U
(43) Veröffentlichungstag der Anmeldung: 19.09.2018
(73) Patentinhaber: REHAU AG + Co, 95111 Rehau (DE)
(72) Erfinder: Fröber, Jörg, 95100 Selb (DE); Hanns, Philipp, 95111 Rehau (DE)

(56) Entgegenhaltungen:
- EP-A1- 1 712 422
- EP-A1- 3 070 489
- EP-B1- 2 265 467
- DE-A1-102013 015 336
- FR-A1- 2 809 691
- US-A1- 2006 267 359

## Beschreibung

Die vorliegende Erfindung betrifft Elektronikmodulsystem für ein Kraftfahrzeug, umfassend ein Verkleidungsteil aus einem polymeren Werkstoff und wenigstens ein mit dem Verkleidungsteil verbundenes oder an diesem angeordnetes Elektronikmodul, wobei das Verkleidungsteil eine, bei bestimmungsgemäßer Verwendung am Kraftfahrzeug, sichtbare Außenseite und eine der Außenseite gegenüberliegende Innenseite aufweist.

Im Stand der Technik sind eine Vielzahl von Elektronikmodulsystemen bekannt. Die Elektronikmodule werden hierbei mittels separater Befestigungsmittel an dem Verkleidungsteil befestigt. Die Befestigungsmittel müssen hierzu in der Regel über einen weiteren Arbeitsschritt mit dem Verkleidungsteil stoffschlüssig verbunden werden, z.B. mittels einer Schweiß- oder Klebeverbindung. Hiermit ist ein erhöhter Montageaufwand und entsprechend höhere Kosten verbunden. Beispielhafte Elektronikmodulsysteme hierfür sind den Dokumenten EP 2 265 467 B1 oder DE 10 2013 015 336 A1 entnehmbar.

Ein gattungsgemäßes Elektronikmodulsystem ist aus der Offenlegungsschrift FR 2 809 691 A1 bekannt.

Die Erfindung stellt sich daher die Aufgabe ein Elektronikmodulsystem mit den eingangs beschriebenen Merkmalen anzugeben, das gegenüber dem Stand der Technik einen vereinfachten Zusammenbau des Elektronikmodulsystems ermöglicht.

Erfindungsgemäß wird diese Aufgabe gelöst durch ein Elektronikmodulsystem für ein Kraftfahrzeug, umfassend ein Verkleidungsteil aus einem polymeren Werkstoff und wenigstens ein mit dem Verkleidungsteil verbundenes oder an diesem angeordnetes Elektronikmodul, wobei das Verkleidungsteil eine, bei bestimmungsgemäßer Verwendung am Kraftfahrzeug, sichtbare Außenseite und eine der Außenseite gegenüberliegende Innenseite aufweist, wobei erfindungsgemäß ein Teilabschnitt einstückig zusammen mit dem Verkleidungsteil hergestellt und/oder ausgebildet ist, und der Teilabschnitt eine formschlüssige Aufnahme für das Elektronikmodul bildet.

Die Erfindung nutzt zur Ausbildung einer formschlüssigen Aufnahme Bereiche des Verkleidungsteiles selbst, sodass mit der Herstellung des Verkleidungsteils zeitgleich bereits die formschlüssige Aufnahme hergestellt wird. Hierdurch vereinfacht und vergünstigt sich der Zusammenbau des Elektronikmodulsystems deutlich.

Das Verkleidungsteil weist wenigstens einen an die Außenseite angrenzenden und einstückig mit dem Verkleidungsteil geformten Flanschbereich auf, wobei der Teilabschnitt ein Teilabschnitt des Flanschbereichs ist. Der Flanschbereich dient üblicherweise ansonsten der Anbindung zu an das Verkleidungsteil angrenzenden Bauteilen (z.B. Karosserieelemente, Motorhaube etc.). Erfindungsgemäß übernimmt der Flanschbereich somit die Doppelfunktion der Anbindung und Aufnahme des Elektronikmoduls.

Der Teilabschnitt ist bevorzugt auf der Innenseite ausgeformt.

Die Herstellung des Verkleidungsteils kann insbesondere mittels eines Spritzgussverfahrens oder zeilenweise oder schichtweise unter Verwendung eines zeilenaufbauenden oder schichtaufbauenden, generativen Verfahrens aufgebaut oder hergestellt sein. Das generative Verfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting - EBM / Electron Beam Additive Manufacturing - EBAM) oder Verfestigen von Pulvermaterial mittels Binder (Binder Jetting) umfassen. Das generative Verfahren kann ein generatives Freiraumverfahren, insbesondere Auftragsschweißen, Wax Deposition Modeling (WDM), Contour Crafting, Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Das Verkleidungsteil kann insbesondere eine Stoßfängerverkleidung oder ein Heckspoiler oder eine Radlaufverkleidung oder eine Türverkleidung sein.

Das Elektronikmodul kann ein Steuergerät oder einen Sensor oder einen Radarsensor oder ein Antennenmodul mit einer Kurzstreckenfunk-Antenne oder mit einer Dezimeterwellen-Antenne umfassen. Eine Kurzstreckenfunk-Antenne kann insbesondere eine Antenne für ein Bluetooth-System und eine Dezimeterwellen-Antenne kann insbesondere eine Antenne für ein LTE-System sein.

Die formschlüssige Aufnahme kann insbesondere durch eine in dem Verkleidungsteil ausgeformte Tasche gebildet sein. Die Tasche kann insbesondere eine aus der Ebene des Flanschbereiches hervorspringende Tasche ausgebildet sein.

Das Elektronikmodul kann in der formschlüssigen Aufnahme mittels wenigstens eines Rastelements fixiert sein. Das Elektronikmodul kann insbesondere mittels wenigstens eines Rastelements und mittels wenigstens eines mit dem Rastelement zusammenwirkenden Anschlages fixiert sein.

Die formschlüssige Aufnahme kann so ausgebildet sein, dass das Elektronikmodul von der Innenseite des Verkleidungsteils aus zugänglich und demontierbar ist.

Der polymere Werkstoff des Verkleidungsteils kann Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialen umfassen. Der polymere Werkstoff kann zudem Füllstoffe, insbesondere Talkum, Kohlenstoff (Ruß) und/oder Verstärkungsfasern (insbesondere aus Kohlenstoff oder Glas) aufweisen.

### Ausführungsbeispiele

Im Folgenden wird die Erfindung anhand lediglich ein Ausführungsbeispiel darstellender Zeichnungen näher erläutert. Es zeigen schematisch:
- Fig. 1: eine perspektivische Teilansicht eines Elektronikmodulssystems von oben;
- Fig. 2: eine weitere perspektivische Teilansicht des Elektronikmodulssystems mit zwei Querschnittsdarstellungen;
- Fig. 3: eine perspektivische Teilansicht des Elektronikmodulssystems von unten.

In den Figuren werden gleiche oder funktionsgleiche Elemente mit den gleichen Bezugszeichen versehen.

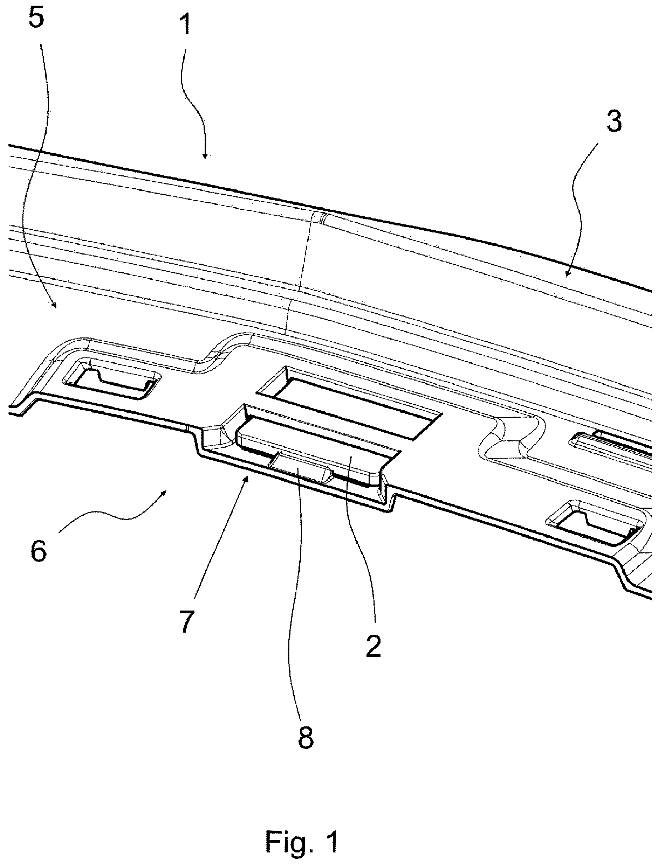

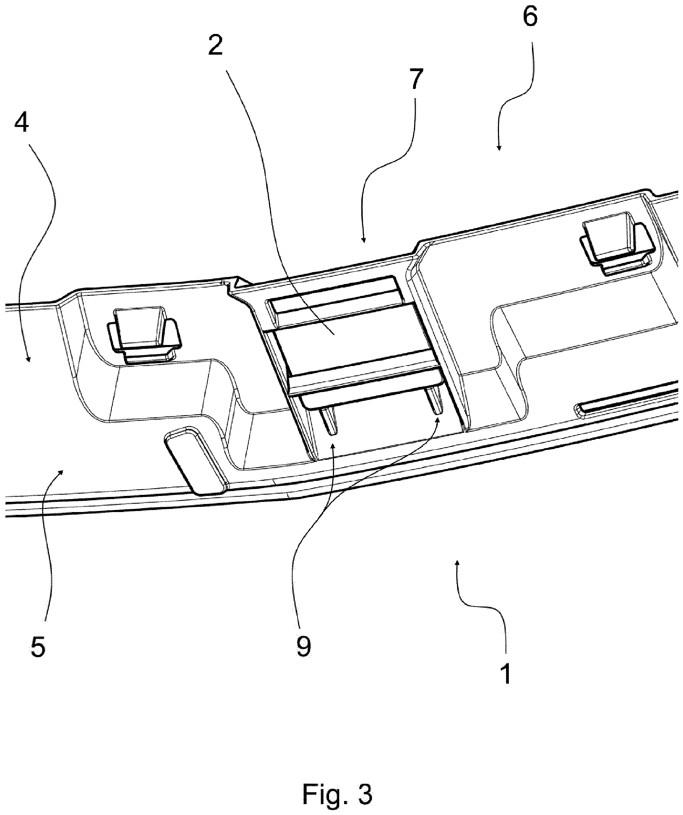

In den Fig. 1 bis Fig. 3 ist ein Elektronikmodulsystem für ein Kraftfahrzeug dargestellt, umfassend ein Verkleidungsteil 1 aus einem polymeren Werkstoff und umfassend wenigstens ein mit dem Verkleidungsteil 1 verbundenes oder an diesem angeordnetes Elektronikmodul 2. Das Verkleidungsteil 1 weist eine, bei bestimmungsgemäßer Verwendung am Kraftfahrzeug, sichtbare Außenseite 3 und eine der Außenseite 3 gegenüberliegende Innenseite 4 auf. Das Verkleidungsteil 1 weist wenigstens einen an die Außenseite 3 angrenzenden und einstückig mit dem Verkleidungsteil 1 geformten Flanschbereich 5 auf. Alternativ ist ein Bereich der Außenseite 3 des Verkleidungsteils 1 von einem zusätzlichen Abdeckelement verdeckt. Ein Teilabschnitt 6 des Flanschbereichs 5 ist einstückig zusammen mit dem Verkleidungsteil 1 hergestellt und/oder ausgebildet. Alternativ ist ein von dem Abdeckelement verdeckter Aufnahmebereich einstückig zusammen mit dem Verkleidungsteil 1 hergestellt und/oder ausgebildet. Der Teilabschnitt 6 oder der Aufnahmebereich bilden eine formschlüssige Aufnahme 7 für das Elektronikmodul 2. Das Verkleidungsteil 1 kann eine Stoßfängerverkleidung oder ein Heckspoiler oder eine Radlaufverkleidung sein. Das Elektronikmodul 2 kann ein Steuergerät oder einen Sensor oder einen Radarsensor oder ein Antennenmodul mit einer Kurzstreckenfunk-Antenne oder mit einer Dezimeterwellen-Antenne umfassen.

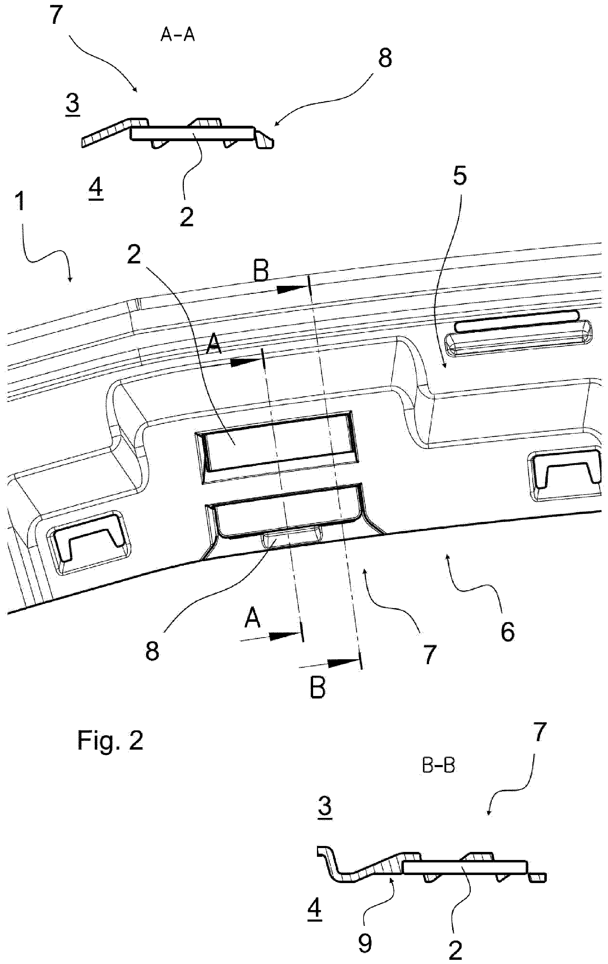

Vorliegend umfasst das Elektronikmodul 2 ein vorgenanntes Antennenmodul. Die formschlüssige Aufnahme 7 ist durch eine in dem Verkleidungsteil 1 ausgeformte Tasche gebildet. Die Tasche ist als eine aus der Ebene des Flanschbereiches 5 hervorspringende Tasche ausgebildet. Das Elektronikmodul ist in der formschlüssigen Aufnahme 7 mittels wenigstens eines Rastelements 8 und mittels wenigstens eines mit dem Rastelement 8 zusammenwirkenden Anschlages 9 fixiert (vgl. insbesondere die Querschnittsdarstellungen in Fig. 2). Das alternative Abdeckelement kann eine Zierleiste oder eine Zierblende oder ein Lüftungsgitter sein. Die formschlüssige Aufnahme 7 ist so ausgebildet, dass das Elektronikmodul von der Innenseite 4 des Verkleidungsteils 1 aus zugänglich und demontierbar ist. In den Querschnittsdarstellungen in Fig. 2 ist deutlich erkennbar, dass der Teilabschnitt 6 des Flanschbereichs 5 einstückig zusammen mit dem Verkleidungsteil 1 hergestellt und/oder ausgebildet ist.

## Patentansprüche

1. Elektronikmodulsystem für ein Kraftfahrzeug, umfassend
- ein Verkleidungsteil (1) aus einem polymeren Werkstoff und
- wenigstens ein mit dem Verkleidungsteil (1) verbundenes oder an diesem angeordnetes Elektronikmodul (2),
wobei das Verkleidungsteil (1) eine, bei bestimmungsgemäßer Verwendung am Kraftfahrzeug, sichtbare Außenseite (3) und eine der Außenseite (3) gegenüberliegende Innenseite (4) aufweist,
wobei ein Teilabschnitt (6) einstückig zusammen mit dem Verkleidungsteil (1) hergestellt und/oder ausgebildet ist, und der Teilabschnitt (6) eine formschlüssige Aufnahme (7) für das Elektronikmodul (2) bildet,
**dadurch gekennzeichnet, dass**
das Verkleidungsteil (1) wenigstens einen an die Außenseite (3) angrenzenden und einstückig mit dem Verkleidungsteil (1) geformten Flanschbereich (5) aufweist, wobei der Teilabschnitt (6) ein Teilabschnitt (6) des Flanschbereichs (5) ist und der Flanschbereich ansonsten der Anbindung zu an das Verkleidungsteil angrenzenden Bauteilen dient, sodass der Flanschbereich somit die Doppelfunktion der Anbindung und Aufnahme des Elektronikmoduls übernimmt.

2. Elektronikmodulsystem für ein Kraftfahrzeug nach dem vorstehenden Anspruch, **dadurch gekennzeichnet, dass** der Teilabschnitt (6) auf der Innenseite (4) ausgeformt ist.

3. Elektronikmodulsystem nach einem der vorstehenden Ansprüche, **dadurch gekennzeichnet, dass** das Verkleidungsteil (1) eine Stoßfängerverkleidung oder ein Heckspoiler oder eine Radlaufverkleidung oder eine Türverkleidung ist.

4. Elektronikmodulsystem nach einem der vorstehenden Ansprüche, **dadurch gekennzeichnet, dass** das Elektronikmodul (2) ein Steuergerät oder einen Sensor oder einen Radarsensor oder ein Antennenmodul mit einer Kurzstreckenfunk-Antenne oder mit einer Dezimeterwellen-Antenne umfasst.

5. Elektronikmodulsystem nach einem der vorstehenden Ansprüche, **dadurch gekennzeichnet, dass** die formschlüssige Aufnahme (7) durch eine in dem Verkleidungsteil (1) ausgeformte Tasche gebildet ist.

6. Elektronikmodulsystem nach einem der vorstehenden Ansprüche, **dadurch gekennzeichnet, dass** das Elektronikmodul in der formschlüssigen Aufnahme (7) mittels wenigstens eines Rastelements (8) und mittels wenigstens eines mit dem Rastelement (8) zusammenwirkenden Anschlages (9) fixiert ist.

7. Elektronikmodulsystem nach einem der vorstehenden Ansprüche, **dadurch gekennzeichnet, dass** die formschlüssige Aufnahme (7) so ausgebildet ist, dass das Elektronikmodul von der Innenseite (4) des Verkleidungsteils (1) aus zugänglich und demontierbar ist.

## Claims

1. Electronics module system for a motor vehicle, comprising
- a covering part (1) made of a polymeric material and
- at least one electronics module (2) connected to or arranged on the covering part (1),
wherein the covering part (1) has an outer side (3), which is visible when used as intended on the motor vehicle, and an inner side (4) opposite the outer side (3),
wherein a subsection (6) is produced and/or configured in one piece together with the covering part (1), and the subsection (6) forms a form-fitting receptacle (7) for the electronics module (2),
**characterised in that**
the covering part (1) has at least one flange region (5) bordering the outer side (3) and moulded in one piece with the covering part (1), wherein the subsection (6) is a subsection (6) of the flange region (5) and the flange region otherwise serves for connecting to components bordering the covering part, so that the flange region thus takes on the dual function of connecting and receiving the electronics module.

2. Electronics module system for a motor vehicle according to the preceding claim, **characterised in that** the subsection (6) is formed on the inner side (4).

3. Electronics module system according to one of the preceding claims, **characterised in that** the covering part (1) is a bumper trim or a rear spoiler or a wheel-arch trim or a door trim.

4. Electronics module system according to one of the preceding claims, **characterised in that** the electronics module (2) comprises a control instrument or a sensor or a radar sensor or an antenna module with a short-range radio antenna or with a UHF antenna.

5. Electronics module system according to one of the preceding claims, **characterised in that** the form-fitting receptacle (7) is formed by a pocket formed in the covering part (1).

6. Electronics module system according to one of the preceding claims, **characterised in that** the electronics module is fixed in the form-fitting receptacle (7) by means of at least one latching element (8) and by means of at least one stop (9) co-operating with the latching element (8).

7. Electronics module system according to one of the preceding claims, **characterised in that** the form-fitting receptacle (7) is configured such that the electronics module is accessible and demountable from the inner side (4) of the covering part (1).

## Revendications

1. Système de module électronique pour un véhicule automobile, comprenant
- une pièce d'habillage (1) en matière polymère et
- au moins un module électronique (2) relié à la pièce d'habillage (1) ou disposé sur celle-ci,
la pièce d'habillage (1) comportant, en cas d'utilisation conforme à l'usage prévu sur le véhicule automobile, une face extérieure (3) visible et une face intérieure (4) opposée à la face extérieure (3),
une section (6) étant fabriquée et/ou formée d'un seul tenant avec la pièce d'habillage (1), et la section (6) formant un logement (7) par retenue mécanique pour le module électronique (2),
**caractérisé en ce que**
la pièce d'habillage (1) comporte au moins une zone de bride (5) adjacente à la face extérieure (3) et formée d'un seul tenant avec la pièce d'habillage (1), la section (6) étant une section (6) de la zone de bride (5) et la zone de bride servant à part cela au raccordement à des éléments adjacents à la pièce d'habillage, de sorte que la zone de bride assume ainsi la double fonction de raccordement et de réception du module électronique.

2. Système de module électronique pour un véhicule automobile selon la revendication précédente, **caractérisé en ce que** la section (6) est formée sur la face intérieure (4).

3. Système de module électronique selon l'une des revendications précédentes, **caractérisé en ce que** la pièce d'habillage (1) est un habillage de pare-chocs, un aileron arrière, une doublure d'aile ou un panneau de portière.

4. Système de module électronique selon l'une des revendications précédentes, **caractérisé en ce que** le module électronique (2) comprend un appareil de commande, un capteur, un capteur radar ou un module d'antenne avec une antenne radio à courte portée ou avec une antenne pour ondes décimétriques.

5. Système de module électronique selon l'une des revendications précédentes, **caractérisé en ce que** le logement (7) par retenue mécanique est formé par une poche formée dans la pièce d'habillage (1).

6. Système de module électronique selon l'une des revendications précédentes, **caractérisé en ce que** le module électronique est fixé dans le logement (7) par retenue mécanique au moyen d'au moins un élément d'encliquetage (8) et au moyen d'au moins un taquet (9) coopérant avec l'élément d'encliquetage (8).

7. Système de module électronique selon l'une des revendications précédentes, **caractérisé en ce que** le logement (7) par retenue mécanique est réalisé de telle manière que le module électronique est accessible et démontable depuis la face intérieure (4) de la pièce d'habillage (1).
